## Europäisches Patentamt
## European Patent Office
## Office européen des brevets

(19)

(11) Veröffentlichungsnummer: **0 292 730 B1**

# EUROPÄISCHE PATENTSCHRIFT

(12)

(45) Veröffentlichungstag der Patentschrift: **14.10.92**

(51) Int. Cl.⁵: **B60J 7/05**, B60J 7/043

(21) Anmeldenummer: **88106871.2**

(22) Anmeldetag: **29.04.88**

(54) **Fahrzeugdach.**

(30) Priorität: **22.05.87 DE 3717186**

(43) Veröffentlichungstag der Anmeldung:
**30.11.88 Patentblatt 88/48**

(45) Bekanntmachung des Hinweises auf die
Patenterteilung:
**14.10.92 Patentblatt 92/42**

(84) Benannte Vertragsstaaten:
**DE ES FR GB IT NL**

(56) Entgegenhaltungen:
**DE-C- 2 950 453**
**DE-U- 1 779 679**
**FR-A- 2 577 176**

**PATENT ABSTRACTS OF JAPAN vol. 6, no.
216 (M-168)(1094) 29 Oktober 1982, & JP-A-57
121924 (NISSAN JIDOSHA) 29 Juli 1982,**

(73) Patentinhaber: **Webasto AG Fahrzeugtechnik
Kraillingerstrasse 5
W-8035 Stockdorf(DE)**

(72) Erfinder: **Fürst, Arpad
Ravensburger Ring 49
W-8000 München 60(DE)**
Erfinder: **Vecchioni, Bernhard
Luitpoldstrasse 16
W-8035 Gauting(DE)**

**Beschreibung**

Die Erfindung bezieht sich auf ein Fahrzeugdach mit einem dem wahlweisen Verschließen oder mindestens teilweisen Freilegen einer Dachöffnung dienenden Deckel, der durch Handbetätigung ausgehend von einer Schließstellung in eine ausgestellte Lage verschwenkt und über die feste Dachfläche nach hinten geschoben werden kann, wobei mit dem Deckel nahe der Deckelvorderkante in Verbindung stehende erste Führungsglieder sowie nach hinten in Abstand von den ersten Führungsgliedern angeordnete, mit dem Deckel verbundene zweite Führungsglieder vorgesehen sind, wobei im Zusammenwirken mit dachfesten Führungsbahnen die ersten Führungsglieder die Lage der Deckelvorderkante während der Deckelverschiebebewegung bestimmen und wobei die zweiten Führungsglieder den in seiner vorderen Endstellung stehenden Deckel um eine von den ersten Führungsgliedern bestimmte Querachse schwenken.

Bei einem bekannten Fahrzeugdach dieser Art (DE-C-2 950 453) sind als erste und zweite Führungsglieder Gleitschuhe vorgesehen, die in jeweils einem diesen Führungsgliedern gemeinsam zugeordneten, geradlinigen Führungskanal zu beiden Seiten der Dachöffnung hintereinander laufen. Die ersten (vorderen) Führungsglieder sind mit dem Deckel über scharnierartige Gelenke verbunden. Die gegenüber den ersten Führungsgliedern nach hinten versetzten zweiten Führungsglieder tragen jeweils einen mehrteiligen Spindeltrieb, der seinerseits an den Deckel angelenkt ist. Die Ausziehlänge der Spindeltriebe läßt sich über ein Antriebskabel mittels einer Handkurbel verstellen, die nahe dem vorderen Ende des Deckels an diesen gelagert ist. Die Spindeltriebe machen den Verstellmechanismus des bekannten Fahrzeugdaches relativ kompliziert und störanfällig. Die Montage ist umständlich.

Desweiteren ist ein Fahrzeugdach bekannt (DE-U-1 779 679), bei dem sowohl die ersten als auch die zweiten Führungsglieder mit dem Deckel fest verbunden sind. Das erste und das zweite Führungsglied greifen zu beiden Seiten des Deckels jeweils in ein und denselben Führungskanal ein. Dieser Führungskanal hat einen solchen Verlauf, daß er den Deckel beim anfänglichen Zurückschieben aus der Schließstellung eine Ausstell-Schwenkbewegung aufzwingt. Nahe dem vorderen Deckelende ist ein Schwenkgriff mit einer Verriegelungszunge gelagert, die mit einem Widerlager am vorderen Rand der Dachöffnung zusammenwirkt und die beim Schließen des Daches den Deckel aufwärts führt und gegen den vorderen Rand der Dachöffnung preßt. Dieses bekannte Fahrzeugdach hat zwar einen relativ einfachen Aufbau, jedoch ist die Abdichtung im Bereich des vorderen und des hinteren Randspalts zwischen dem Deckel und dem Rand der Dachöffnung problematisch, weil die dort vorgesehene Dichtung beim Öffnen und Schließen zwangsläufig in erheblichem Umfang gequetscht wird.

Der Erfindung liegt die Aufgabe zugrunde, ein Fahrzeugdach zu schaffen, das eine einwandfreie Abdichtung zuläßt und gleichzeitig einen besonders einfachen, robusten und montagefreundlichen Aufbau hat.

Diese Aufgabe wird ausgehend von einem Fahrzeugdach der eingangs genannten Art erfindungsgemäß dadurch gelöst, daß die ersten Führungsglieder mit dem Deckel fest verbunden sind, daß den ersten und den zweiten Führungsgliedern jeweils getrennte Führungsbahnen zugeordnet sind, daß die Führungsbahnen für die zweiten Führungsglieder in ihrem vorderen Bereich einen nach hinten und oben aufsteigenden Ast aufweisen, daß die zweiten Führungsglieder zum Erzwingen der Ausstellbewegung des Deckels am Deckel in Deckellängsrichtung verstellbar geführt sind, und daß der gesamte, dem Verstellen der zweiten Führungsglieder dienende Verstellmechanismus am Deckel montiert ist.

Aufgrund des Verstellmechanismus mit in Deckellängsrichtung verstellbaren zweiten Führungsgliedern kommt das Dach mit wenigen verstellbaren Bauteilen aus. Das Dach läßt sich besonders leicht montieren. Abweichend von dem bekannten Fahrzeugdach gemäß DE-U-1 779 679 führt bei dem Fahrzeugdach nach der Erfindung der Deckel während des Ausstellvorganges eine reine Schwenkbewegung ohne überlagerte Schiebebewegung aus, womit ein schädliches Quetschen der Dichtung im Bereich des vorderen und hinteren Randspalts vermieden wird.

Die dachfesten Führungen können zweckmäßig auf beiden Seiten der Dachöffnung sitzende Führungsschienen aufweisen, und die Führungsbahnen können dabei als Führungskanäle in den beiden Längsseiten der Führungsschienen ausgebildet sein. Dadurch wird dem Deckel eine besonders stabile Führung vermittelt.

In weiterer Ausgestaltung der Erfindung verlaufen die Führungsbahnen für die ersten Führungsglieder in Längsrichtung der Dachöffnung parallel oder nahezu parallel zu der festen Dachfläche. Ein an den aufsteigenden Ast nach hinten anschließender Teil der Führungsbahnen für die zweiten Führungsglieder verläuft vorzugsweise parallel oder nahezu parallel zu der festen Dachfläche. Dadurch wird erreicht, daß der ausgestellte Deckel beim Zurückschieben eine im wesentlichen konstante Schwenklage beibehält. Durch eine abweichende Auslegung der Führungsbahnen können, falls erwünscht, aber auch abweichende Bewegungscharakteristiken des Deckels vorgegeben werden, beispielsweise in der Weise, daß sich der Ausstellwinkel des Deckels beim Zurückschieben verringert.

Zweckmäßig weisen die Führungsbahnen für die zweiten Führungsglieder einen an den aufsteigenden Ast nach vorne anschließenden kurzen, zur festen Dachfläche parallelen oder nahezu parallelen Abschnitt auf. In diesen Abschnitt treten die zweiten Führungsglieder in der Deckelschließstellung ein, wodurch der Deckel nahe seiner Vorderkante gegen unerwünschte Aufwärtsbewegungen gesichert wird.

In weiterer Ausgestaltung der Erfindung ist der Deckel samt Verstellmechanismus herausnehmbar ausgebildet. Der Deckel kann dann bei schönem Wetter beispielsweise im Kofferraum verstaut werden. Für diesen Zweck können die Führungskanäle für die ersten und zweiten Führungsglieder mit Auslässen versehen sein, durch welche die Führungsglieder beim Abnehmen und Wiederaufsetzen des Deckels hindurchtreten. Mindestens eine der Führungsbahnen kann mit einem lösbaren Anschlag zum Begrenzen der Verschiebebewegung des Deckels nach hinten versehen sein, wobei dieser Anschlag zweckmäßig derart ausgebildet und angeordnet ist, daß er in seiner Betriebsstellung ein unbeabsichtigtes Lösen des Deckels verhindert.

Entsprechend einer bevorzugten Weiterbildung der Erfindung ist in der Nähe der Deckelhinterkante eine mit der dachfesten Führung zusammenwirkende, verstellbare Verriegelungsvorrichtung zum Verriegeln des in der Schließstellung befindlichen Deckels montiert. Eine solche Verriegelungsvorrichtung verhindert ein Flattern des Deckels bei Fahrt mit hoher Geschwindigkeit und/oder auf schlechten Straßen. Sie schützt außerdem gegen Einbruchsversuche.

Ein besonders einfacher Aufbau wird erhalten, wenn die zweiten Führungsglieder jeweils mit einem Ausstellelement verbunden sind, das von einem seitlichen Deckelträger in Deckellängsrichtung verstellbar geführt ist. Die zweiten Führungsglieder stehen vorteilhaft jeweils über ein Antriebskabel mit einem an der Deckelunterseite angeordneten Stellglied, beispielsweise in Form eines Drehgriffes, in Antriebsverbindung, mittels dessen der Deckel ausgestellt und verschoben werden kann.

Die Antriebskabel sind zweckmäßig jeweils sowohl mit einem der Ausstellelemente als auch mit einem einen Teil der Verriegelungsvorrichtung bildenden Fangelement verbunden, das entlang dem zugehörigen Deckelträger verschiebbar geführt ist und das sich in seiner Verriegelungsstellung unter eine Nase der betreffenden Führungsschiene legt.

Um unerwünschte Deckelschwenkbewegungen während des Verschiebens des Deckels zu verhindern, ist das Ausstellelement vorzugsweise in Deckelstellungen zwischen der voll ausgestellten Lage und der voll zurückgeschobenen Lage mit dem zugehörigen Deckelträger selbsttätig kuppelbar.

Vorteilhaft ragen die seitlichen Deckelträger über den vorderen Rand des Deckels nach vorne vor, um die ersten Führungsglieder an einer Stelle zu tragen, die gegenüber dem vorderen Deckelrand nach vorne und unten versetzt ist. Dadurch wird ein Eintauchen des vorderen Deckelsrandes unter die Dachebene beim Ausstellen des Deckels verhindert, was zum Schutz der Randspaltdichtung gegen übermäßige Beanspruchung zusätzlich beiträgt.

Die Erfindung ist im folgenden anhand eines Ausführungsbeispiel näher erläutert. In den beiliegenden Zeichnungen zeigen:

Fig.1 eine Teildraufsicht auf das Fahrzeugdach,

Fig.2 einen Schnitt entlang der Linie II-II der Fig.1 bei in Schließstellung befindlichem Deckel,

Fig. 3 einen Schnitt entsprechend Fig.2 bei in seiner vorderen Endstellung befindlichem, jedoch ausgestelltem Deckel,

Fig.4 einen Schnitt entsprechend Fig.2 bei zurückgeschobenem Deckel,

Fig.5 einen Schnitt entlang der Linie V-V der Fig.1 bei in Schließstellung stehendem Deckel,

Fign. 6 und 7 Schnitte entsprechend Fig.5 bei ausgestelltem bzw. bei zurückgeschobenem Deckel,

Fign. 8 und 9 Schnitte entlang den Linien VIII-VIII bzw. IX-IX der Fig.5,

Fig.10 einen Schnitt entlang der Linie X-X der Fig.2,

Fig.11 eine Teilansicht, die schematisch unterschiedliche Lagen des Fangelements beim Übergang des Deckels von der Schließstellung in die ausgestellte Lage bzw. umgekehrt erkennen läßt,

Fig.12 einen Schnitt entlang der Linie XII-XII der Fig.11,

Fig.13 einen Schnitt entlang der Linie XIII-XIII der Fig.5,

Fig.14 in größerem Maßstab eine Teilansicht entsprechend Fig. 2, die Einzelheiten des lösbaren Anschlages zum Begrenzen der Verschiebebewegung des Deckels erkennen läßt,

Fig.15 eine Draufsicht auf die Anordnung nach Fig.14,

Fig.16 einen Schnitt entlang der Linie XVI-XVI der Fig.1 und

Fig.17 eine perspektivische Darstellung des vorderen Teils des einen Deckelträgers mit zugehörigem Ausstellelement.

In einer festen Dachfläche 20 eines Fahrzeugs, insbesondere Kraftfahrzeugs, ist eine Dachöffnung 21 vorgesehen, die mittels eines starren Deckels 22 verschlossen oder mindestens zum Teil freigelegt werden kann. Der Deckel 22 kann aus lichtdurchlässigem Werkstoff, wie Glas oder Kunstsoff, oder aus lichtundurchlässigem Werkstoff, insbesondere Blech, bestehen. Die Dachöffnung 21 ist von einem Dachrahmen 23 umfaßt, der im veranschaulichten Ausführungsbeispiel aus Kunststoff gefertigt ist und den Rand der Dachöffnung 21 mit einer nach außen vorspringenden Lippe 24 übergreift. In den Dachrahmen 23 von unten eingeschraubte Schrauben 25 pressen abgewinkelte Spannglieder 26 von unten gegen die feste Dachfläche 20, um auf diese Weise den von oben in die Dachöffnung 21 engesetzten Dachrahmen zu fixieren. Diese Ausbildung eignet sich insbesondere für den nachträglichen Einbau. Es versteht sich jedoch, daß der Dachrahmen auch eine beliebige andere, beispielsweise für einen Serieneinbau bestimmte, Ausgestaltung erhalten kann. Der Dachrahmen 23 trägt Führungsschienen 27, die sich zu beiden Längsseiten der Dachöffnung 21 in Fahrzeuglängsrichtung erstrecken.

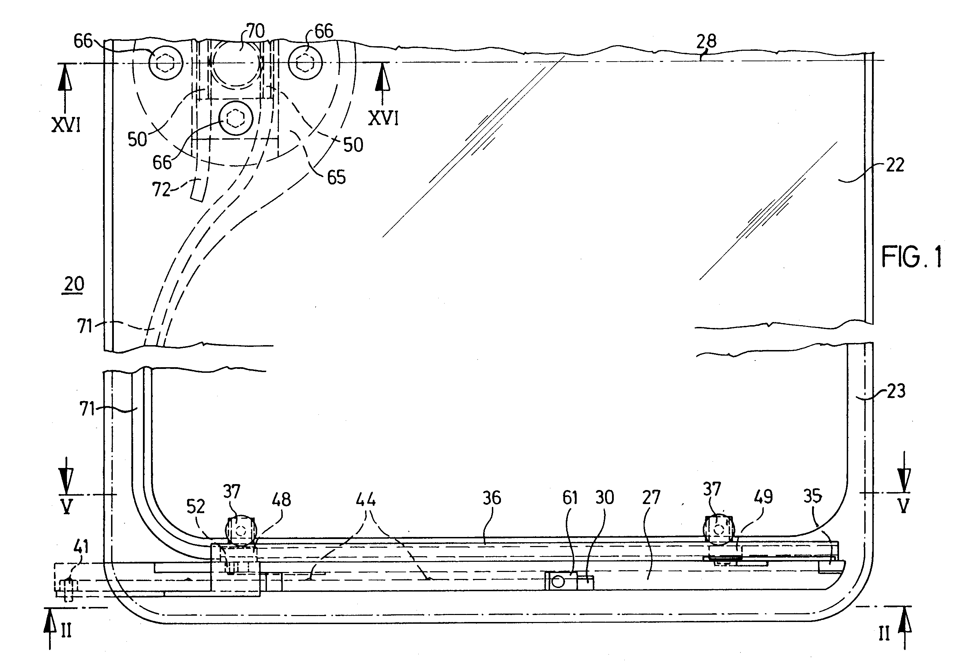

Die Führungsschienen 27 können mit dem Dachrahmen 23 einstückig verbunden sein. Die Führungsschienen 27 und die übrigen Bauteile des Fahrzeugdaches sind im wesentlichen spiegelbildlich symmetrisch zu einer Längssymmetrieebene 28 (Fig.1) ausgebildet. Infolgedessen sind nachstehend im einzelnen nur der Aufbau und die Funktionsweise der Anordnung auf der einen Seite erläutert.

Die Führungsschiene 27 ist an ihrer Außenseite mit einem in Längsrichtung der Dachöffnung laufenden, geradlinigen Führungskanal 29 versehen, der sich nahezu parallel zu der festen Dachfläche 20 erstreckt. Der Führungskanal 29 ist vorne geschlossen, während er an seinem hinteren Ende mit einem Auslaß 30 versehen ist. An der innenliegenden Längsseite der Führungsschiene 27 befindet sich ein Führungskanal 31, der in seinem vorderen Bereich einen nach hinten und oben aufsteigenden Ast 32 aufweist. Ein an den aufsteigenden Ast 32 nach hinten anschließender Teil 33 des Führungskanals 31 verläuft nahezu parallel zu der festen Dachfläche 20. An den Ast 32 schließt nach vorne ein kurzer, zur festen Dachfläche 20 paralleler oder nahezu paralleler Abschnitt 34 an. Der Führungskanal 31 ist vorne geschlossen, und er läuft hinten in einem Auslaß 35 aus.

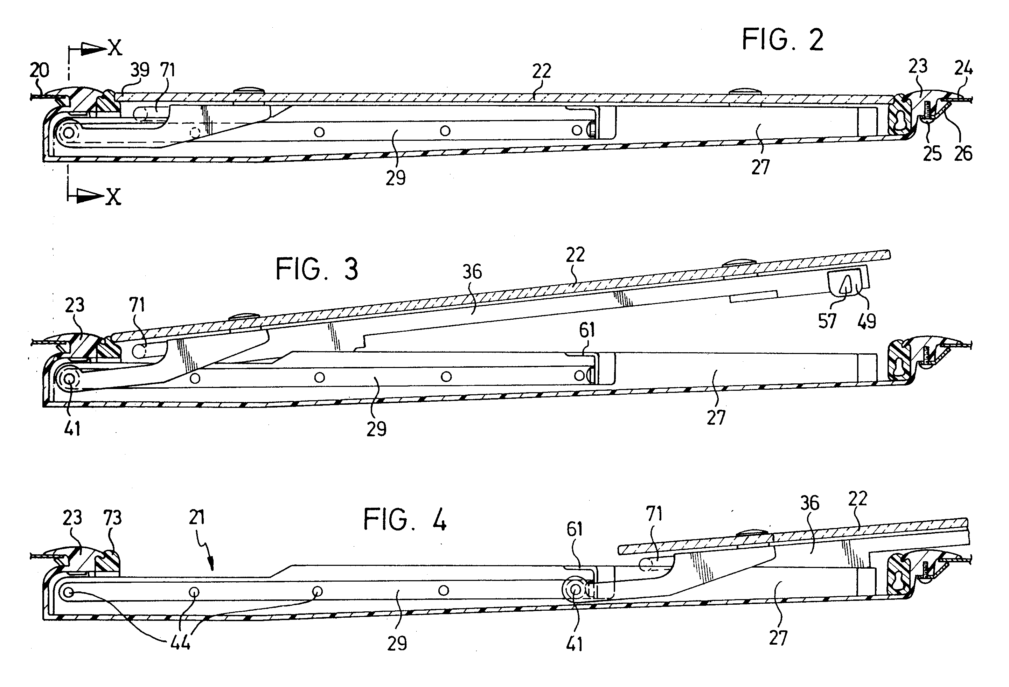

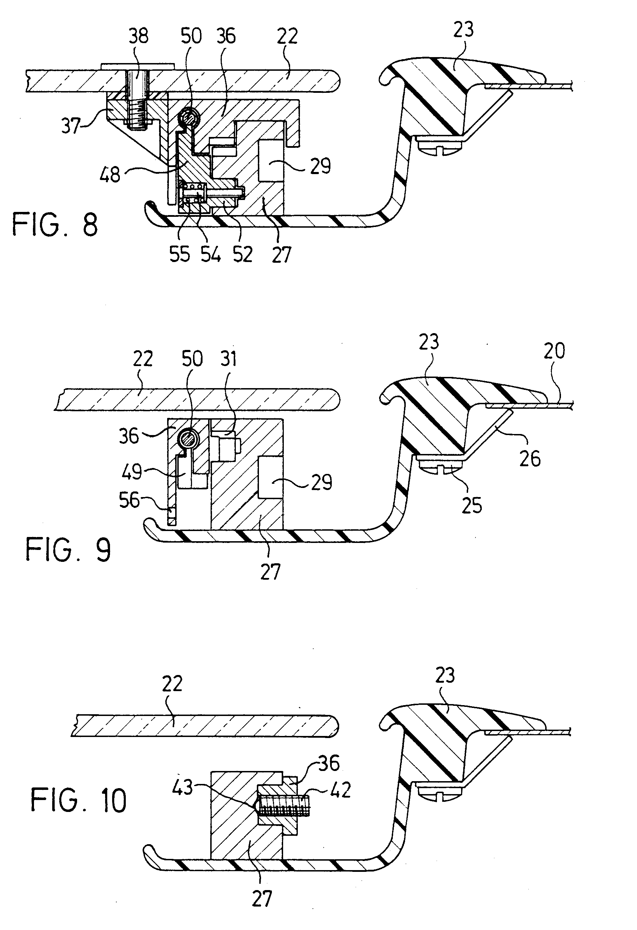

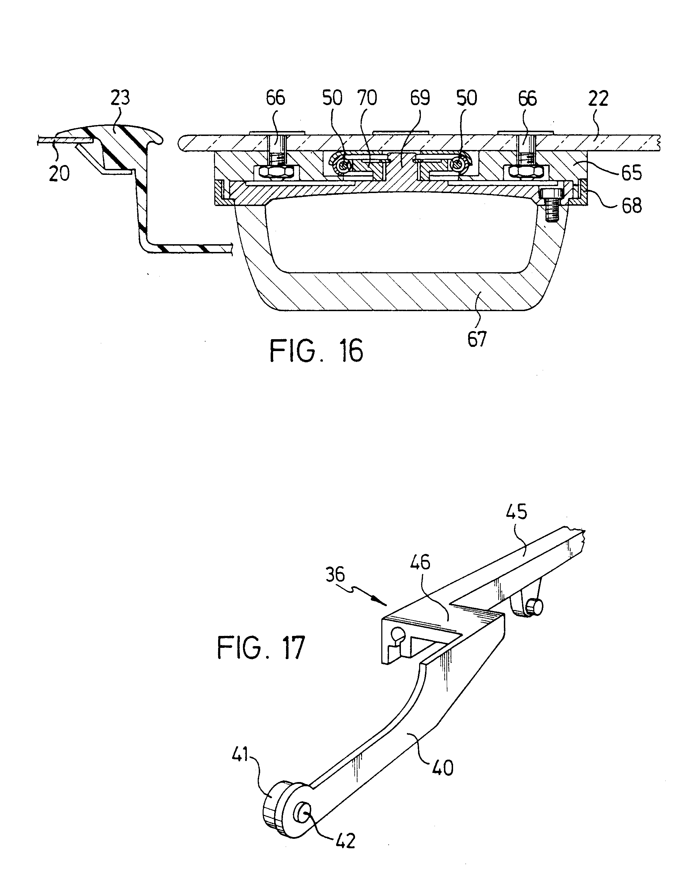

Der Deckel 22 sitzt beidseits auf je einem Deckelträger 36 auf. Bei dem veranschaulichten Ausführungsbeispiel ist der Deckel 22 mit dem Deckelträger 36 über Winkelstücke 37 verbunden, in welche durch den Deckel 22 hindurchreichende Schrauben 38 eingeschraubt sind (Fig. 8). Der Deckelträger 36 weist einen über den vorderen Rand 39 des Deckels 22 vorspringenden Teil 40 auf, der an seinem vorderen Ende ein erstes Führungsglied 41 trägt. Das Führungsglied 41 ist als Rolle ausgebildet, die auf einer mit dem Deckelträger 36 fest verbundenen Stummelwelle 42 drehbar gelagert ist (Fig.17). Die ersten Führungsglieder 41 und die Stummelwellen 42 bestimmen eine gegenüber dem vorderen Deckelrand 39 nach vorne und unten versetzte Schwenkachse, um welche der Deckel 22 beim Ausstellen verschwenkt wird. Entsprechend Fig.10 ist die Stummelwelle 42 als in eine Gewindebohrung des Deckelträgerteils 40 eingeschraubtes Schraubglied ausgebildet, das an seinem innenliegenden Ende eine federnd nachgiebig gelagerte Kugelraste 43 trägt. Das erste Führungsglied 41 greift seitlich in den Führungskanal 29 ein, wobei sich die Kugelraste 43 in Rastvertiefungen 44 einlegen kann, die über die Längsabmessung des Führungskanals 29 verteilt sind. Jeweils eine solche Rasvertiefung ist mit der Stummelwelle 42 ausgerichtet, wenn der Deckel 22 seine vordere Endstellung (Fign. 2 und 3) sowie seine hintere Endstellung (Fig. 4) einnimmt.

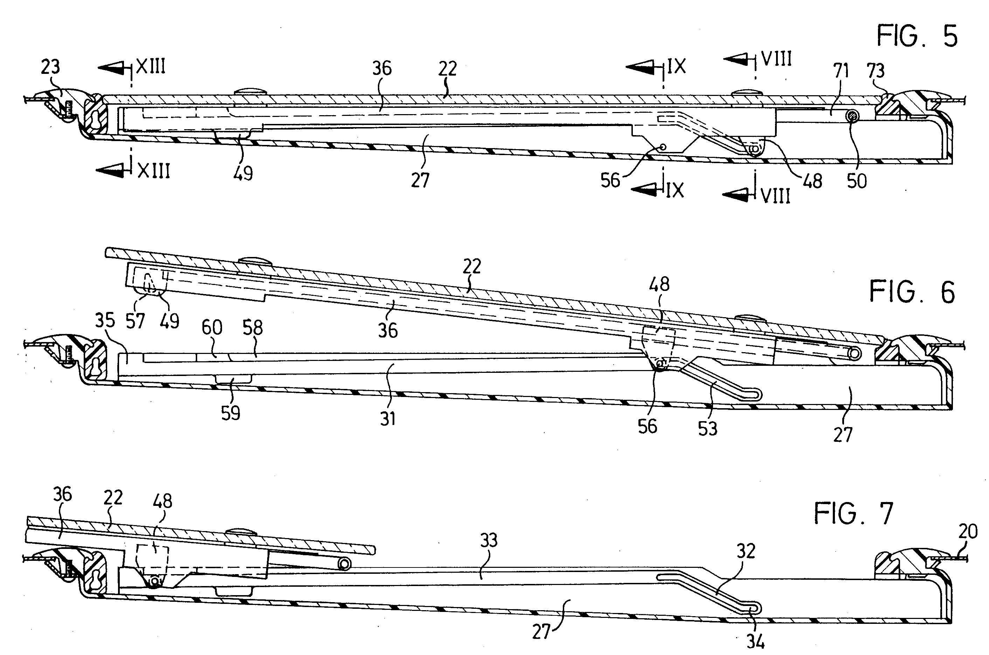

Der vordere Teil 40 ist mit einem Führungsabschnitt 45 des Deckelsträgers 36 über eine Brücke 46 von umgekehrt U-förmiger Gestalt verbunden, die auf der Oberseite der Führungsschiene 27 verschiebbar geführt ist (Fig.8). Der Führungsabschnitt 45 weist eine in Längsrichtung des Deckelträgers 36 verlaufende Führungsnut 47 auf. In dieser Führungsnut 47 sind im vorderen Teil ein Ausstellelement 48 und im hinteren Teil ein Fangelementträger 49 längsverschiebbar geführt. Sowohl das Ausstellelement 48 als auch der Fangelementträger 49 stehen mit einem Antriebskabel 50 in fester Verbindung, das in einem Kabelkanal 51 des Deckelträgers 36 läuft. Die vordere Endstellung von Ausstellelement 48 und Fangelementträger 49 ist in Fig.5 veranschaulicht, während das Ausstellelement und der Fangelementträger in Fig.6 ihre hintere Endstellung mit Bezug auf den Deckelträger 36 einnehmen.

Das Ausstellelement 48 trägt an seiner Außenseite ein seitlich vorspringendes zweites Führungsglied 52, das in den Führungskanal 31 eingreift und entlang diesem Kanal verschiebbar ist. Der Führungskanal 31 weist im Bereich des vorderen Abschnitts 34, des ansteigenden Astes 32 und des vorderen Endes des Teils 33 einen vertieften Abschnitt 53 auf, in den ein Stift 54 eintauchen kann, der in dem Ausstellelement 48 und dem zweiten Führungsglied 52 seitlich verstellbar gelagert und mittels einer Feder 55 nach außen federnd vorgespannt ist (Fig. 8). Wenn beim Verstellen des Ausstellelements 48 der Stift 54 das hintere Ende des vertieften Abschnitts 53 erreicht, wird der Stift 54 entgegen der Kraft der Feder 55 nach innen verschoben, wobei der Stift 54 mit seinem innenliegenden Ende in eine Bohrung 56 des Deckelträgers 36 einrastet.

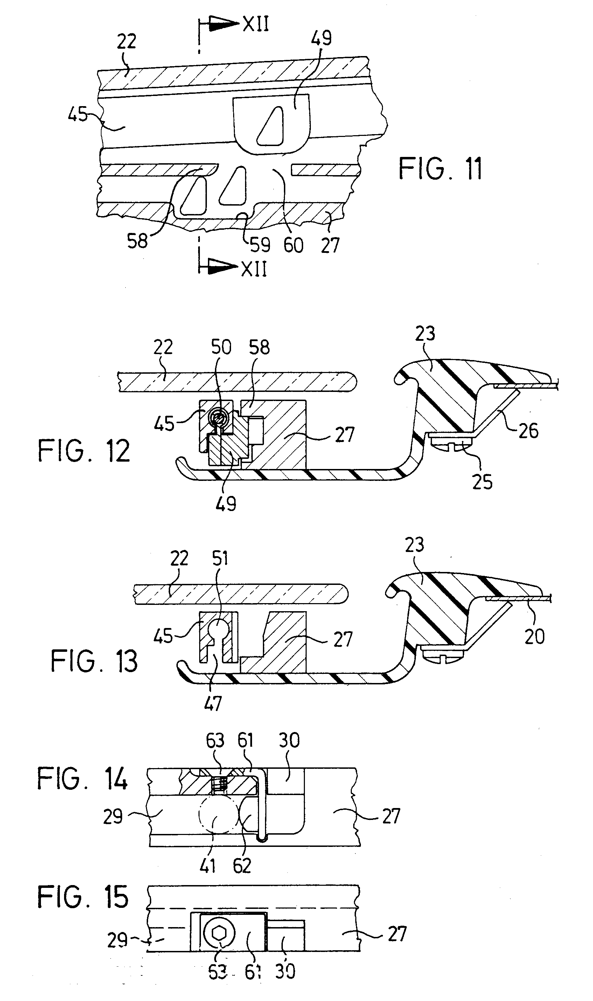

Der Fangelementträger 49 weist auf seiner äußeren Seitenfläche ein nach außen seitlich vorspringendes Fangelement 57 auf (Fign. 11 und 12), das sich in der Deckelschließstellung unter eine von der Führungsschiene 27 gebildete Nase 58 legt. Dabei taucht der Fangelementträger 49 in eine Ausnehmung 59 der Führungsschiene 27 ein. Im oberen Teil der Führungsschiene 27 befindet sich gegenüber der Ausnehmung 59 schräg nach hinten versetzt eine Austrittsöffnung 60, über welche das Fangelement 57 beim Ausstellen des Deckels 22 von der Führungsschiene 27 freikommt.

Am hinteren Ende des Führungskanals 29 befindet sich ein Anschlag 61, der einen in den Führungskanal 29 hineinragenden elastischen Puffer 62 trägt und der mit der Führungsschiene 27 über eine Schraube 63 verbunden ist. Wenn der Deckel 22 seine hintere Endstellung erreicht, trifft das erste Führungsglied 41 in der in Fig.14 angedeuteten Weise auf den Puffer 62, wodurch die Verschiebebewegung des Deckels 22 nach hinten begrenzt wird. Nach Lösen der Schraube 63 und Abnahme oder Verschwenken des Anschlags 61 kann das erste Führungsglied 41 über den Auslaß 30 aus dem Führungskanal 29 herausgezogen werden, wobei gleichlaufend das zweite Führungsglied 52 den Führungskanal 31 über den Auslaß 35 verläßt. Auf diese Weise kann der Deckel nach Wunsch einfach abgenommen und beispielsweise im Kofferraum verstaut werden, während er durch den Anschlag 61 gegen unbeabsichtigtes Lösen gesichert ist.

An der Deckelunterseite ist im Bereich der Längssymmetrieebene 28 und nahe dem vorderen Rand 39 des Deckels 22 eine Lagerscheibe 65 mittels Schrauben 66 befestigt. Gegen die Lagerscheibe 65 legt sich von unten ein Drehgriff 67 an. Der Drehgriff 67 wird mittels einer auf die Lagerscheibe 65 aufgeschraubten Überwurfmutter 68 gehalten. Der Drehgriff 67 weist eine nach oben vorstehende Nabe 69 auf, mit der ein Antriebsritzel 70 drehfest verbunden ist. Das Antriebsritzel 70 steht in Kämmeingriff mit den als Gewindekabeln ausgebildeten Antriebskabeln 50, von denen das eine dem Verschieben von Ausstellelement 48 und Fangelementträger 49 auf der einen Deckelseite und das andere dem Verschieben der entsprechenden Bauteile auf der anderen Deckelseite dient. Im vorderen Bereich des Deckels 22 laufen die Antriebskabel 50 in Führungsrohren 71, 72.

In der Deckelschließstellung (Fign. 2 und 5) befinden sich das Ausstellelement 48 und der Fangelementträger 49 in ihrer vorderen Endstellung. Das zweite Führungsglied 52 liegt in dem Abschnitt 34 des Führungskanals 31, während das Fangelement 57 unter die Nase 58 greift. Auf diese Weise ist der Deckel 22 vorne und hinten gesichert. Der Deckel 22 wird gegen eine ringsumlaufende Dichtung 73 des Dachrahmens 23 angedrückt. Soll der Deckel 22 ausgehend von dieser Stellung verstellt werden, wird der Drehgriff gedreht. Dadurch werden über das Antriebskabel 50 das damit verbundene Ausstellelement 48 und der gleichfalls am Antriebskabel 50 angebrachte Fangelementträger 49 nach hinten verschoben. Das Fangelement 57 kommt von der Nase 58 frei (Fig. 11), während gleichzeitig das zweite Führungsglied 52 in den nach hinten ansteigenden Ast 32 des Führungskanals 31 übertritt. Die von dem Führungskanalast 32 und dem Ausstellelement 48 gebildete Kulissen-Ausstellvorrichtung bewirkt ein Verschwenken des Deckels 22 um die von den ersten Führungsgliedern 41 bestimmte Schwenkachse. Während dieses Schwenkvorganges greift die Kugelraste 43 in die vorderste Rastvertiefung 44 ein. Durch mehr oder minder weites Verdrehen des Drehgriffes 67 kann der Deckel 22 in jede beliebige Zwischenstellung zwischen der Schließstellung (Fig. 2 und 5) und der voll ausgestellten Lage (Fig. 3 und 6) gebracht werden. Wird der Deckel 22 ausgehend von der voll ausgestellten Lage gemäß den Fign. 3 und 6 durch entsprechende Krafteinwirkung auf den Drehgriff 67 nach hinten geschoben, rastet der Stift 54 in die Bohrung 56 des Deckelträgers 36 ein, wodurch das Ausstellelement 48 und der Deckelträger 36 für die Verschiebebewegung miteinander gekoppelt werden. Der Deckel 22 kann nach hinten verschoben werden, bis das erste Führungsglied 41 auf den Anschlag 61 trifft (Fig. 4 und 7). In dieser Stellung greift die Kugelraste 43 in die hinterste der Rastvertiefungen 44 ein. Soll der Deckel 22 ganz abgenommen werden, braucht nur der Anschlag 61 gelöst zu werden. Die Führungsglieder 41, 52 lassen sich dann aus den zugehörigen Führungskanälen 29, 31 herausziehen.

Beim Schließen des Deckels 22 verlaufen die vorgehend geschilderten Vorgänge in entsprechend umgekehrter Reihenfolge. Sobald der Deckel 22 seine vordere Endstellung (Fign. 3 und 6) erreicht, wird die Kupplung zwischen dem Ausstellelement 48 und dem Deckelträger 36 selbsttätig gelöst, indem die Feder 55 den Stift 54 in den vertieften Abschnitt 53 eingreifen läßt und dabei aus der Bohrung 56 herauszieht. Durch entsprechendes Drehen des Drehgriffes 67 wird der Deckel nach unten verschwenkt, wobei das Fangelement 57 in die Öffnung 60 eintritt und mittels des Antriebskabels 50 unter die Nase 58 gezogen wird.

Für den Fachmann verstehen sich zahlreiche Abwandlungen der vorstehend im einzelnen erläuterten Ausführungsform. Beispielsweise kann bei einem für Serieneinbau bestimmten Dach der Dachrahmen 23 durch entsprechendes Abkanten der festen Dachfläche erhalten oder beispielsweise als Blechrahmen mit der Dachfläche fest verbunden, bzw. verklebt oder verschweißt werden. Ein dem Anschlag 61 entsprechender Anschlag kann schwenkbar gelagert werden, um durch Verschwenken wahlweise in die Sperrstellung oder eine Freigabestellung gebracht werden zu können. Die Dichtung 73 kann statt am Dachrahmen auch am Deckel angebracht werden.

## Patentansprüche

1. Fahrzeugdach mit einem dem wahlweisen Verschließen oder mindestens teilweisen Freilegen einer Dachöffnung (21) dienenden Deckel (22), der durch Handbetätigung ausgehend von einer Schließstellung in eine ausgestellte Lage verschwenkt und über die feste Dachfläche (20) nach hinten geschoben werden kann, wobei mit dem Deckel nahe der Deckelvorderkante in Verbindung stehende erste Führungsglieder (41) sowie nach hinten in Abstand von den ersten Führungsgliedern angeordnete, mit dem Deckel verbundene zweite Führungsglieder (52) vorgesehen sind, wobei im Zusammenwirken mit dachfesten Führungsbahnen (29, 31) die ersten Führungsglieder (41) die Lage der Deckelvorderkante während der Deckelverschiebebewegung bestimmen und wobei die zweiten Führungsglieder (52) den in seiner vorderen Endstellung stehenden Deckel um eine von den ersten Führungsgliedern bestimmte Querachse schwenken,
**dadurch gekennzeichnet,** daß
die ersten Führungsglieder (41) mit dem Deckel (22) fest verbunden sind, daß den ersten und den zweiten Führungsgliedern (41, 52) jeweils getrennte Führungsbahnen (29, 31) zugeordnet sind, daß die Führungsbahnen (31) für die zweiten Führungsglieder (52) in ihrem vorderen Bereich einen nach hinten und oben aufsteigenden Ast aufweisen, daß die zweiten Führungsglieder (52) zum Erzwingen der Ausstellbewegung des Deckels (22) am Deckel in Deckellängsrichtung verstellbar geführt sind, und daß der gesamte dem Verstellen der zweiten Führungsglieder (52) dienende Verstellmechanismus (48,50,67) am Deckel montiert ist.

2. Fahrzeugdach nach Anspruch 1, dadurch gekennzeichnet, daß die dachfesten Führungen auf beiden Seiten der Dachöffnung (21) sitzende Führungsschienen (27) aufweisen.

3. Fahrzeugdach nach Anspruch 2, dadurch gekennzeichnet, daß die Führungsbahnen als Führungskanäle (29,31) in den beiden Längsseiten der Führungsschienen (27) ausgebildet sind.

4. Fahrzeugdach nach einem der vorhergehenden Ansprüche, dadurch gekennzeichnet, daß die Führungsbahnen (Führungskanäle 29) für die ersten Führungsglieder (41) in Längsrichtung der Dachöffnung (21) parallel oder nahezu parallel zu der festen Dachfläche (20) verlaufen.

5. Fahrzeugdach nach Anspruch 4, dadurch gekennzeichnet, daß ein an den aufsteigenden Ast (32) nach hinten anschließender Teil (33) der Führungsbahnen (Führungskanäle 31) für die zweiten Führungsglieder (52) parallel oder nahezu parallel zu der festen Dachfläche (20) verläuft.

6. Fahrzeugdach nach Anspruch 4 oder 5, dadurch gekennzeichnet, daß die Führungsbahnen (Führungskanäle 31) für die zweiten Führungsglieder (52) einen an den aufsteigenden Ast (32) nach vorne anschließenden kurzen, zur festen Dachfläche (20) parallelen oder nahezu parallelen Abschnitt (34) aufweisen.

7. Fahrzeugdach nach einem der vorhergehenden Ansprüche, dadurch gekennzeichnet, daß der Deckel (22) samt Verstellmechanismus (Ausstellelemente 48, Antriebskabel 50, Drehgriff 67) herausnehmbar ausgebildet ist.

8. Fahrzeugdach nach Ansprüchen 2 und 7, dadurch gekennzeichnet, daß die Führungskanäle (29, 31) für die ersten und zweiten Führungsglieder (41, 52) mit Auslässen (30, 35) versehen sind, durch welche die Führungsglieder beim Abnehmen und Wiederaufsetzen des Deckels (22) hindurchtreten.

9. Fahrzeugdach nach einem der vorhergehenden Ansprüche, dadurch gekennzeichnet, daß mindestens eine der Führungsbahnen (Führungskanal 29) mit einem lösbaren Anschlag (61) zum Begrenzen der Verschiebebewegung des Deckels (22) nach hinten versehen ist.

10. Fahrzeugdach nach Ansprüchen 8 und 9, dadurch gekennzeichnet, daß der Anschlag (61) derart ausgebildet und angeordnet ist, daß er in seiner Betriebsstellung ein unbeabsichtigtes Lösen des Deckels (22) verhindert.

11. Fahrzeugdach nach einem der vorhergehenden Ansprüche, dadurch gekennzeichnet, daß in der Nähe der Deckelhinterkante eine mit der dachfesten Führung (Führungsschienen 27) zusammenwirkende, verstellbare Verriegelungsvorrichtung (Fangelementträger 49, Fangelemente 57) zum Verriegeln des in der Schließstellung befindlichen Deckels (22) montiert ist.

12. Fahrzeugdach nach einem der vorhergehenden Ansprüche, dadurch gekennzeichnet, daß die zweiten Führungsglieder (52) jeweils mit einem Ausstellelement (48) verbunden sind, das von einem seitlichen Deckelträger (36) in Deckellängsrichtung verstellbar geführt ist.

13. Fahrzeugdach nach einem der vorhergehenden Ansprüche, dadurch gekennzeichnet, daß die zweiten Führungsglieder (52) jeweils über ein Antriebskabel (50) mit einem an der Deckelunterseite angeordneten Stellglied (Drehgriff 67) in Antriebsverbindung stehen, mittels dessen der Deckel (22) ausgestellt und verschoben werden kann.

14. Fahrzeugdach nach einem der Ansprüche 11 bis 13, dadurch gekennzeichnet, daß die Antriebskabel (50) jeweils sowohl mit einem der Ausstellelemente (48) als auch mit einem einen Teil der Verriegelungsvorrichtung bildenden Fangelement (57) verbunden sind, das entlang dem zugehörigen Deckelträger (36) verschiebbar geführt ist und das sich in seiner Verriegelungsstellung unter eine dachfeste Nase (58) legt.

15. Fahrzeugdach nach einem der Ansprüche 12 bis 14, dadurch gekennzeichnet, daß das Ausstellelement (48) in Deckelstellungen zwischen der voll ausgestellten Lage und der voll zurückgeschobenen Lage mit dem zugehörigen Deckelträger (36) selbsttätig kuppelbar ist.

16. Fahrzeugdach nach einem der Ansprüche 12 bis 15, dadurch gekennzeichnet, daß die seitlichen Deckelträger (36) über den vorderen Rand (39) des Deckels (22) nach vorne vorragen und die ersten Führungsglieder (41) an einer Stelle tragen, die gegenüber dem vorderen Deckelrand nach vorne und unten versetzt ist.

**Claims**

1. A vehicle roof having a cover (22) serving for optional closure or at least partial exposure of a roof aperture (21) and which, when actuated by hand, can be pivoted from a closed position into an opened position and pushed rearwardly over the fixed roof surface (20), first guide means (41) connected to the cover and close to the leading edge of the cover, as well as second guide means (52) connected to the cover and disposed at the rear and at a distance from the first guide members being provided, whereby in cooperation with guide tracks (29, 31) rigid with the roof, the first guide means (41) determine the position of the leading edge of the cover during the displacement movement of the cover, the second guide means (52) pivoting the cover which is in its extreme forward position about a transverse axis which is determined by the first guide means, characterised in that the first guide means (41) are rigidly connected to the cover (22) and in that separate guide tracks (29, 31) are associated respectively with the first and second guide means (41, 52) and in that the guide tracks (31) for the second guide members (52) have in their forward region a rearwardly and upwardly rising branch and in that the second guide members (52) are guided for adjustment on the cover and in the longitudinal direction thereof in order to bring about the extended-open position of the cover (22) and in that the entire adjustment mechanism (48, 50, 67) which serves for adjustment of the second guide members (52) is mounted on the cover.

2. A vehicle roof according to Claim 1, characterised in that the guides rigid with the roof have guide rails (27) seated on both sides of the roof aperture (21).

3. A vehicle roof according to Claim 2, characterised in that the guide tracks are constructed as guide channels (29, 31) in the two longitudinal sides of the guide rails (27).

4. A vehicle roof according to one of the preceding Claims, characterised in that the guide tracks (guide channels 29) for the first guide members (41) extend in the longitudinal direction of the roof aperture (21) parallel or virtually parallel with the fixed roof surface (20).

5. A vehicle roof according to Claim 4, characterised in that adjacent the rear end of the rising branch (32) there is a part (33) of the guide tracks (guide channels 31) for the second guide members (52) which extends parallel or virtually parallel with the fixed roof surface (20).

6. A vehicle roof according to Claim 4 or 5, characterised in that the guide tracks (guide channels 31) for the second guide members (52) have, adjacent the front end of the rising branch (32), a short portion (34) which is parallel or virtually parallel with the fixed roof surface (20).

7.   A vehicle roof according to one of the preceding Claims, characterised in that the cover (22) with the adjusting mechanism (opening elements 48, driving cable 50, twist handle 67) is constructed so that it can be removed.

8.   A vehicle roof according to Claims 2 and 7, characterised in that the guide channels (29, 31) for the first and second guide members (41, 52) are provided with apertures (30, 35) through which the guide members pass when the cover (22) is being removed and replaced.

9.   A vehicle roof according to one of the preceding Claims, characterised in that at least one of the guide tracks (guide channel 29) is provided with a separable abutment (61) to limit the rearwards displacement movement of the cover (22).

10.   A vehicle roof according to Claims 8 and 9, characterised in that the abutment (61) is so constructed and disposed that in its operative position it prevents an unintentional release of the cover (22).

11.   A vehicle roof according to one of the preceding Claims, characterised in that in the vicinity of the rear edge of the cover there is mounted, cooperating with the guide (guide rails 27) rigid with the roof, an adjustable locking device (catch element carrier 49, catch elements 57) for locking the cover (22) when it is in the closed position.

12.   A vehicle roof according to one of the preceding Claims characterised in that the second guide members (52) are respectively connected to an opening element (48) which is guided for adjustment in the longitudinal direction of the cover by a lateral cover carrier (36).

13.   A vehicle roof according to one of the preceding Claims, characterised in that the second guide members (52) are connected for driving effect via a drive cable (50) to a positioning member (twist handle 67) disposed on the underside of the cover and by means of which the cover (22) can be extended into the open position and displaced.

14.   A vehicle roof according to one of Claims 11 to 13, characterised in that the drive cables (50) are connected both to one of the opening elements (48) and also to a catch element (57) which forms a part of the locking device, the catch element being guided for displacement along the associated cover carrier (36) and which, in its locked position, assumes a position below a projection (58) which is rigid with the roof.

15.   A vehicle roof according to one of Claims 12 to 14, characterised in that the opening element (48) can be automatically coupled to the associated cover carrier (36) in cover positions between the fully extended-open position and the fully pushed-back position.

16.   A vehicle roof according to one of Claims 12 to 15, characterised in that the lateral cover carriers (36) project forwardly beyond the front edge (39) of the cover (22) and carry the first guide members (41) at the location which is offset forwardly and downwardly in relation to the leading edge of the cover.

**Revendications**

1.   Toit de véhicule comportant un panneau (22) servant au choix, à fermer l'ouverture (21) du toit ou à libérer celle-ci au moins partiellement, panneau qui peut être pivoté dans une position de débattement à partir d'une position de fermeture par action manuelle et être glissé vers l'arrière par dessus la surface fixe (20) du toit, avec des premiers organes de guidage (41) coopérant avec le panneau au voisinage de son bord avant et des seconds organes de guidage (52) reliés au panneau, à l'arrière à une certaine distance des premiers organes de guidage, et par coopération avec des chemins de guidage (29, 31) solidaires du toit, les premiers organes de guidage (41) définissent la position du bord avant du panneau pendant le mouvement de coulissement du panneau et les seconds organes de guidage (52) basculent le panneau en position de fin de course avant autour d'un axe transversal défini par les premiers organes de guidage,
caractérisé en ce que les premiers organes de guidage (41) sont solidaires du panneau (22), des chemins de guidage (29, 31) chaque fois distincts étant associés aux premiers et seconds organes de guidage (41, 52) et en ce que les chemins de guidage (31) des seconds organes de guidage (52) ont dans leur zone avant, une branche montant vers l'arrière, les seconds organes de guidage (52) étant guidés de manière réglable dans la direction longitudinale du panneau, sur le panneau pour forcer le mouvement de débattement du panneau (22) et en ce que l'ensemble du mécanisme de réglage (48, 50, 67) servant à commander les seconds organes de guidage (52) est monté dans le panneau.

2. Toit de véhicule selon la revendication 1, caractérisé en ce que les organes de guidage solidaires du toit comportent des rails de guidage (27) prévus des deux côtés de l'ouverture (21) du toit.

3. Toit de véhicule selon la revendication 2, caractérisé en ce que les chemins de guidage sont en forme de canaux de guidage (29, 31) réalisés dans les deux grands côtés des rails de guidage (27).

4. Toit de véhicule selon l'une des revendications précédentes, caractérisé en ce que les chemins de guidage (canaux de guidage 29) des premiers organes de guidage (41), pris dans la direction longitudinale d'ouverture (21) du toit, sont parallèles ou pratiquement parallèles à la surface fixe (20) du toit.

5. Toit de véhicule selon la revendication 4, caractérisé en ce qu'une partie (33), adjacente vers l'arrière à la branche montante (32), des chemins de guidage (canaux de guidage 31) pour les seconds organes de guidage (52) est parallèle ou pratiquement parallèle à la surface fixe (20) du toit.

6. Toit de véhicule selon la revendication 4 ou 5, caractérisé en ce que les chemins de guidage (canaux de guidage 31) des seconds organes de guidage (52) comportent un segment (34) adjacent à l'avant à la branche montante (32), segment court et parallèle ou pratiquement parallèle à la surface fixe (20) du toit.

7. Toit de véhicule selon l'une des revendications précédentes, caractérisé en ce que le panneau (22) ainsi que le mécanisme de commande (élément de débattement 48, câble d'entraînement 50, poignée rotative 67) sont montés extractibles.

8. Toit de véhicule selon les revendications 2 et 7, caractérisé en ce que les canaux de guidage (29, 31) des premiers et seconds organes de guidage (41, 52) sont munis de sorties (30, 35) à travers lesquelles passent les organes de guidage lors de l'enlèvement et de la remise en place du panneau (22).

9. Toit de véhicule selon l'une des revendications précédentes, caractérisé en ce qu'au moins l'un des chemins de guidage (canal de guidage 29) est muni d'une butée amovible (61) pour limiter le mouvement de coulissement du panneau (22) vers l'arrière.

10. Toit de véhicule selon les revendications 8 et 9, caractérisé en ce que la butée (61) est réalisée et conçue pour éviter dans sa position de fonctionnement tout desserrage accidentel du panneau (22).

11. Toit de véhicule selon l'une des revendications précédentes, caractérisé en ce qu'à proximité du bord arrière du panneau, il y a un dispositif de verrouillage, réglable, coopérant avec le guidage solidaire du toit (rail de guidage 27), ce dispositif de verrouillage (support de l'élément d'accrochage 49, élément d'accrochage 57) étant monté pour verrouiller le panneau (22) en position de fermeture.

12. Toit de véhicule selon l'une des revendications précédentes, caractérisé en ce que les seconds organes de guidage (52) sont reliés respectivement à un élément de débattement (48), qui est guidé de manière réglable dans la direction longitudinale du panneau par un support de panneau (36) latéral.

13. Toit de véhicule selon l'une des revendications précédentes, caractérisé en ce que les seconds organes de guidage (52) coopèrent chaque fois par un câble d'entraînement (50) avec un organe de commande (poignée rotative 67) prévu sur la face inférieure du panneau, organe de commande qui permet de mettre le panneau (22) en position de débattement ou de coulisser le panneau.

14. Toit de véhicule selon l'une des revendications 11 à 13, caractérisé en ce que les câbles d'entraînement (50) sont reliés à la fois avec l'un des éléments de débattement (48) et avec un élément d'accrochage (57) faisant partie du dispositif de verrouillage, élément d'accrochage qui est guidé de manière coulissante le long du support de panneau (36) correspondant et qui vient sous un bec (58) solidaire du toit pour la position de verrouillage.

15. Toit de véhicule selon l'une des revendications 12 à 14, caractérisé en ce que l'élément de débattement (48) peut être accouplé automatiquement dans les positions du panneau comprises entre la position de débattement complète et la position complètement coulissée vers l'arrière, avec le support de panneau (36) correspondant.

16. Toit de véhicule selon l'une des revendications 12 à 15, caractérisé en ce que les supports latéraux (36) du panneau dépassent vers l'avant par rapport au bord avant (39) du panneau (22) et portent les premiers organes de guidage (41) à un point, qui est décalé vers l'avant et vers le bas par rapport au bord avant du panneau.

EP 0 292 730 B1

FIG. 1

20

22

23

28

XVI

XVI

66 70 66

50 50

66

72 65

71

71

II

II

V

V

41 52 37 48 44 36 61 30 27 37 49 35

FIG. 2

FIG. 3

FIG. 4

EP 0 292 730 B1

FIG. 5

FIG. 6

FIG. 7

FIG. 8

FIG. 9

FIG. 10

FIG. 11

FIG. 12

FIG. 13

FIG. 14

FIG. 15

FIG. 16

FIG. 17